# EUROPÄISCHE PATENTSCHRIFT

(11) **EP 3 086 192 B1**
(45) Veröffentlichungstag und Bekanntmachung des Hinweises auf die Patenterteilung: **30.10.2019**
(21) Anmeldenummer: 15164581.9
(22) Anmeldetag: 22.04.2015
(51) Int. Cl.: G05B 19/402, B23Q 17/00

(54) **VERFAHREN ZUM ÜBERWACHEN DES RUNDLAUFS EINES WERKZEUGS EINER NC-WERKZEUGMASCHINE UND NC-WERKZEUGMASCHINE MIT RUNDLAUFKONTROLLE**
METHOD FOR MONITORING THE CONCENTRICITY OF A TOOL OF AN NC MACHINE TOOL AND NC MACHINE TOOL WITH CONCENTRICITY CONTROL
PROCÉDÉ DE SURVEILLANCE DE LA CONCENTRICITÉ D'UN OUTIL D'UNE MACHINE-OUTIL À COMMANDE NUMÉRIQUE ET MACHINE-OUTIL À COMMANDE NUMÉRIQUE DOTÉE D'UN CONTRÔLE DE CONCENTRICITÉ

(43) Veröffentlichungstag der Anmeldung: 26.10.2016
(73) Patentinhaber: Schwäbische Werkzeugmaschinen GmbH, 78713 Schramberg-Waldmössingen (DE)
(72) Erfinder: Kreet, Matthias, 78737 Fluorn-Winzeln (DE); Siegel, Peter, 72172 Sulz-Bergfelden (DE)
(74) Vertreter: Kohler Schmid Möbus Patentanwälte

(56) Entgegenhaltungen:
- JP-A- 57 101 702
- US-A- 3 681 978
- US-A1- 2009 082 899

## Beschreibung

Die Erfindung betrifft ein Verfahren zum Überwachen des Rundlaufs eines rotierbaren Werkzeugs einer numerisch gesteuerten NC-Werkzeugmaschine sowie eine zugehörige NC-Werkzeugmaschine mit einer solchen Rundlaufkontrolle.

Das Überwachen der korrekten Ausrichtung und/oder der korrekten Position von Werkzeugen oder Werkstücken spielt aufgrund der zunehmenden Automatisierung im Werkzeugmaschinenbau eine immer wichtigere Rolle. Moderne spanabhebende NC-Werkzeugmaschinen umfassen heute häufig automatische Werkzeugwechselsysteme, welche die Produktionsgeschwindigkeit und somit die Produktivität der Werkzeugmaschinen erhöhen. Allerdings können Fehlausrichtungen des Werkzeugs z.B. durch Späne auftreten, die sich zwischen einer Werkzeugaufnahme und dem Werkzeug ablagern und den Rundlauf des Werkzeugs beeinflussen. Während oder nach jedem Werkzeugwechsel sollte daher die korrekte Ausrichtung bzw. der Rundlauf des Werkzeugs überprüft werden.

Das Dokument DE 2161541 A1 offenbart ein Verfahren bei dem ein digitales Signal bei einer leerlaufenden Spindel erzeugt und als Leerlauf-Geräuschsignal gespeichert wird. Wenn an die Spindel eine Last angehängt wird, so wird da gespeicherte Leerlauf-Geräuschsignal in Synchronisation des Last-Ablenksignals reproduziert und von dem Last-Ablenksignal abgezogen, um ein korrigiertes Ablenksignal zu erzeugen, welches eine genaue Darstellung der Spindelablenkung aufgrund der äusseren Last darstellt.

Das Dokument JP 57 101702 A offenbart ein kontaktloses Verfahren und Vorrichtung zur Ermittlung des Rundlaufs eines um die Z-Achse rotierbaren Werkzeugs.

Es ist die Aufgabe der Erfindung, ein einfaches Verfahren zum Überwachen des Rundlaufs eines Werkzeugs einer NC-Werkzeugmaschine sowie eine zugehörige NC-Werkzeugmaschine mit einer Rundlaufkontrolle anzugeben.

Diese Aufgabe wird erfindungsgemäß gelöst durch ein Verfahren zum Überwachen des Rundlaufs gemäß dem unabhängigen Verfahrensanspruch 1.

Erfindungsgemäß wird für jedes zu überprüfende Werkzeug zuerst durch Relativverfahren von Werkzeug und Näherungssensor eine Abstandskennlinie aufgenommen, die vom Abstand des Näherungssensors zum Werkzeug sowie z.B. im Falle eines induktiven Näherungssensors vom Material und Querschnitt der Werkzeugmessfläche abhängig ist. Anschließend werden in einer vorbestimmten Messposition durch Drehen des Werkzeugs nacheinander mehrere unterschiedliche Drehpositionen angefahren.

In der erfindungsgemäßen ersten Variante werden die Messsignale des Näherungssensors in den mehreren unterschiedlichen Drehpositionen als Referenzsignale gespeichert. Für eine Rundlaufkontrolle des Werkzeugs wird das Werkzeug erneut an der vorbestimmten Messposition zum Näherungssensor positioniert und eine Rundlaufabweichung aus der Differenz zwischen den aktuellen Messsignalen des Näherungssensors in den mehreren unterschiedlichen Drehpositionen des Werkzeugs und den gespeicherten Referenzsignalen anhand der Abstandskennlinie ermittelt. Diese erste Variante ist nur bei einer im Verfahrbereich linearen Abstandskennlinie geeignet.

In der erfindungsgemäßen zweiten Variante werden die aus den aktuellen Messsignalen des Näherungssensors anhand der Abstandskennlinie ermittelten Abstände des Werkzeugs zum Näherungssensor in den mehreren unterschiedlichen Drehpositionen des Werkzeugs als Referenzabstände gespeichert. Für eine Rundlaufkontrolle des Werkzeugs wird das Werkzeug erneut an der vorbestimmten Messposition zum Näherungssensor positioniert und eine Rundlaufabweichung aus der Differenz zwischen den aus den aktuellen Messsignalen anhand der Abstandskennlinie ermittelten Ist-Abständen des Werkzeugs zum Näherungssensor in den mehreren unterschiedlichen Drehpositionen des Werkzeugs und den gespeicherten Referenzabständen ermittelt. Diese zweite Variante ist auch bei einer im Verfahrbereich nichtlinearen Abstandskennlinie geeignet.

In beiden Varianten wird das Werkzeug bei Überschreiten einer vorgegebenen Rundlaufabweichung manuell überprüft.

Vorteilhaft wird die Rundlaufkontrolle an jedem eingewechselten Werkzeug durchgeführt. Bei Überschreiten des vorgegebenen Differenzwertes wird der Werkzeugwechselablauf unterbrochen und das Werkzeug zur manuellen Kontrolle in einen Arbeitsraum verfahren.

In einer bevorzugten Verfahrensvariante sind die mehreren unterschiedlichen Drehpositionen des Werkzeugs in äquidistanten Winkelabständen von z.B. 45° angeordnet. Alternativ können die Messsignale und die Referenzsignale und -abstände der Rundlaufkontrolle aber auch kontinuierlich über eine 360°-Drehung des Werkzeugs gemessen und miteinander verglichen werden.

Wenn das Werkzeug mittels einer 3-Achseinheit in X-, Y- und Z-Richtung verfahrbar ist, kann der Näherungssensor ortsfest in der Werkzeugmaschine angeordnet sein. Wenn das Werkzeug nur in Z-Richtung verfahrbar ist, muss der Näherungssensor zumindest in X- und Y-Richtung verfahrbar sein. Vorzugsweise sind jedoch das Werkzeug mittels einer 3-Achseinheit in X-, Y- und Z-Richtung und der Näherungssensor in X- oder Y-Richtung und in Z-Richtung verfahrbar. Die jeweiligen Positionen des Werkzeugs und des Näherungssensors sind aufgrund der NC-Daten bekannt.

Vorzugsweise ist der Näherungssensor ein induktiver, kapazitiver oder optischer Näherungssensor oder ein Ultraschall-Näherungssensor und kann ein analoger oder ein digitaler Sensor sein.

Die oben genannte Aufgabe wird auch gelöst durch eine NC-Werkzeugmaschine mit einem rotierbaren Werkzeug und einem Näherungssensor, die in einer zur Werkzeugachse rechtwinkligen Richtung relativ zueinander verfahrbar sind, und mit einer Maschinensteuerung, die programmiert ist, das oben beschriebene Rundlaufüberwachungsverfahren durchzuführen.

Der Näherungssensor kann im Falle eines in X-, Y- und Z-Richtung verfahrbaren Werkzeugs ortsfest oder, was bevorzugt ist, zumindest in Z-Richtung und in X- oder Y-Richtung verfahrbar angeordnet sein. Vorzugsweise ist der Näherungssensor auf mindestens einer der NC-Achsen der Werkzeugmaschine angeordnet.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigte und beschriebene Ausführungsform ist nicht als abschließende Aufzählung zu verstehen, sondern hat vielmehr beispielhaften Charakter für die Schilderung der Erfindung. Die Erfindung ist in den Figuren schematisch dargestellt, so dass die wesentlichen Merkmale der Erfindung gut zu erkennen ist. Die Darstellungen sind nicht notwendigerweise maßstäblich zu verstehen.

Es zeigt:
- Fig. 1: eine erfindungsgemäße NC-Werkzeugmaschine mit einem Näherungssensor für eine Rundlaufkontrolle eines Werkzeugs;
- Fig. 2: eine Abstandskennlinie des Näherungssensors zum Werkzeug; und
- Fign. 3a, 3b: zwei Messkurven der Rundlauf-Kontrolle.

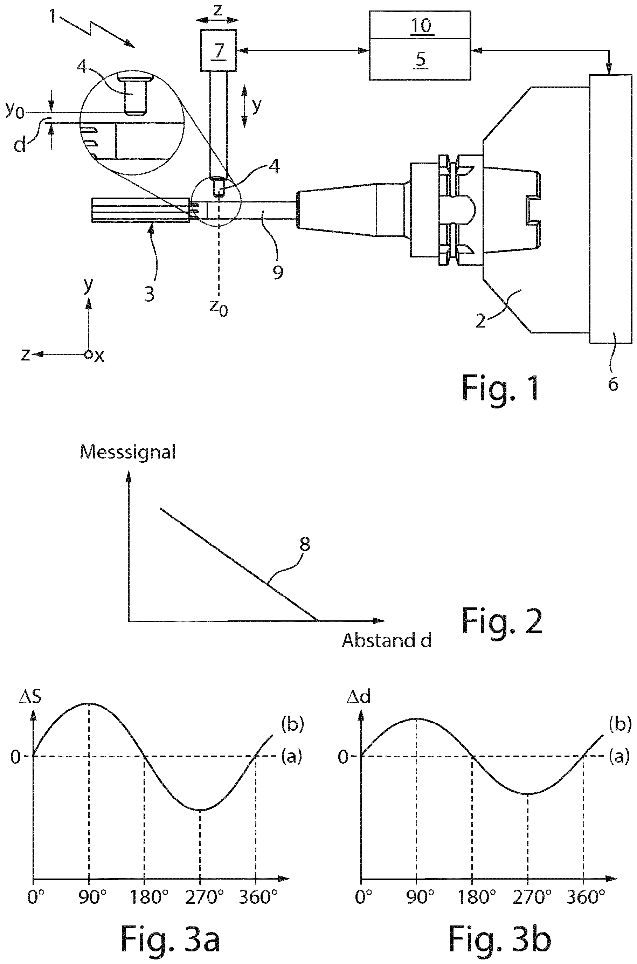

Die in **Fig. 1** gezeigte NC-Werkzeugmaschine **1** umfasst eine horizontale, um die Z-Achse rotierbare Arbeitsspindel **2** mit einem spanabhebenden Werkzeug **3,** einen induktiven Näherungssensor **4** zur Überwachung des Rundlaufs des Werkzeugs 3, sowie eine Maschinensteuerung **5.** Die Arbeitsspindel 2 ist mittels einer NCgesteuerten 3-Achseinheit **6** in X-, Y- und Z-Richtung und der auf einer NC-Achse angeordnete Näherungssensor 4 mittels eines YZ-Antriebs **7** in Y- und Z-Richtung verfahrbar. Die Maschinensteuerung 5 dient zum Ansteuern der 3-Achseinheit 6 und des YZ-Antriebs 7 des Näherungssensors 4. Der Näherungssensor 4 könnte alternativ auch stationär angeordnet sein.

Für jedes einwechselbare Werkzeug 3 wird durch Relativverfahren von Werkzeug 3 und Näherungssensor 4 von ca. ± 0,1mm in Y-Richtung eine in **Fig. 2** gezeigte Abstandskennlinie **8** aufgenommen, die vom Abstand **d** des Näherungssensors 4 zum Werkzeug 3 sowie vom Material und Querschnitt der Werkzeugmessfläche abhängig ist. In diesem kleinen Verfahrbereich von 0,2mm ist die Abstandskennlinie 8 linear.

Die Abstandskennlinie 8 wird an einer vorbestimmten Z-Position **Z₀** des Schaftes **9** des Werkzeugs 3 aufgenommen, wobei die jeweiligen Positionen des Werkzeugs 3 und des Näherungssensors 4 aufgrund der NC-Daten bekannt sind. Die Abstandskennlinie 8 ordnet somit einem gemessenen Induktivwert einen absoluten Abstandswert zu.

Danach werden an der vorbestimmten Z-Position Z₀ und in einem vorbestimmten Messradius **Y₀** durch Drehen des Werkzeugs 3 nacheinander mehrere unterschiedliche Drehpositionen angefahren und die Messsignale des Näherungssensors 4 in den mehreren unterschiedlichen Drehpositionen als Referenzsignale des Werkzeugs 3 in einem Datenspeicher **10** der Maschinensteuerung 5 gespeichert.

Für eine Rundlaufkontrolle des eingewechselten Werkzeugs 3 wird nun wieder die vorbestimmte Messposition (X₀, Y₀, Z₀) angefahren, und die aktuellen Messsignale des Näherungssensors 4 zum Werkzeug 3 in den mehreren Drehpositionen des Werkzeugs 3 werden mit den gespeicherten Referenzsignalen durch Differenzbildung miteinander verglichen. Die resultierende Differenzkurve **ΔS** ist in **Fig. 3a** als gestrichelte waagerechte Linie (a) bei exaktem Rundlauf und als durchgezogene, z.B. sinusförmige Linie (b) bei nicht exaktem Rundlauf des Werkzeugs 3 dargestellt. Aus dieser Differenzkurve ΔS wird anhand der linearen Abstandskennlinie 8 die in **Fig. 3b** gezeigte Rundlaufabweichung **Δd** ermittelt, nämlich die gestrichelte waagerechte Linie (a) bei exaktem Rundlauf und die durchgezogene, z.B. sinusförmige Linie (b) bei nicht exaktem Rundlauf des Werkzeugs 3.

Bei Überschreitung einer vorgegebenen Rundlaufabweichung wird der Werkzeugwechselablauf unterbrochen und das Werkzeug 3 zur manuellen Kontrolle in einen Arbeitsraum verfahren.

Anstatt, wie in Fign. 3a, 3b gezeigt, die Messsignale sowie die Differenzkurve ΔS und die Rundlaufabweichung Δd kontinuierlich über eine 360°-Drehung des Werkzeugs 3 zu ermitteln, können die Referenzsignale und die Rundlaufabweichung auch nur an mehreren unterschiedlichen Drehpositionen des Werkzeugs 3 aufgenommen werden, die vorteilhaft in äquidistanten Winkelabständen angeordnet sind.

Alternativ können auch die aus den aktuellen Messsignalen des Näherungssensors 4 anhand der Abstandskennlinie 8 ermittelten Abstände des Werkzeugs 3 zum Näherungssensor 4 in den mehreren unterschiedlichen Drehpositionen des Werkzeugs 3 als Referenzabstände gespeichert werden. Für eine Rundlaufkontrolle des Werkzeugs 3 wird das Werkzeug 3 erneut an der vorbestimmten Messposition (X₀, Y₀, Z₀) zum Näherungssensor 4 positioniert und die Rundlaufabweichung Δd aus der Differenz zwischen den aus den aktuellen Messsignalen anhand der Abstandskennlinie 8 ermittelten Ist-Abständen des Werkzeugs 3 zum Näherungssensor 4 in den mehreren unterschiedlichen Drehpositionen des Werkzeugs 3 und den gespeicherten Referenzabständen ermittelt.

## Patentansprüche

1. Verfahren zum Überwachen des Rundlaufs eines um die Z-Achse rotierbaren Werkzeugs (3) einer NC-Werkzeugmaschine (1) mittels eines Näherungssensors (4), wobei das Werkzeug (3) und der Näherungssensor (4) relativ zueinander entlang der X-, Y- und Z-Achsen verfahrbar sind, **gekennzeichnet durch** die folgenden Schritte
(a) Aufnehmen einer Abstandskennlinie (8) des Näherungssensors (4) zum Werkzeug (3) an einer vorbestimmten Z-Position (Z₀) des Werkzeugs (3) durch Relativverfahren von Werkzeug (3) und Näherungssensor (4) in einer zur Werkzeugachse (Z) rechtwinkligen Richtung (Y); und
entweder
(b1) Positionieren des Werkzeugs (3) zum Näherungssensor (4) an einer vorbestimmten Messposition (X₀, Y₀, Z₀) und Speichern der Messsignale des Näherungssensors (4) in mehreren unterschiedlichen Drehpositionen des Werkzeugs (3) als Referenzsignale; und
(c1) für eine Rundlaufkontrolle des Werkzeugs (3):
erneutes Positionieren des Werkzeugs (3) zum Näherungssensor (4) an der vorbestimmten Messposition (X₀, Y₀, Z₀),
Ermitteln einer Differenz zwischen den aktuellen Messsignalen des Näherungssensors (4) in den mehreren unterschiedlichen Drehpositionen des Werkzeugs (3) und den gespeicherten Referenzsignalen, Ermitteln einer Rundlaufabweichung (Δd) anhand der Abstandskennlinie (8) aus der Differenz, und
Überprüfen des Werkzeugs (3) bei Überschreiten einer vorgegebenen Rundlaufabweichung;
oder
(b2) Positionieren des Werkzeugs (3) zum Näherungssensor (4) an einer vorbestimmten Messposition (X₀, Y₀, Z₀) und Speichern der aus diesen Messsignalen anhand der Abstandskennlinie (8) ermittelten Abstände des Werkzeugs (3) zum Näherungssensor (4) in mehreren unterschiedlichen Drehpositionen des Werkzeugs (3) als Referenzabstände; und
(c2) für eine Rundlaufkontrolle des Werkzeugs (3):
erneutes Positionieren des Werkzeugs (3) zum Näherungssensor (4) an der vorbestimmten Messposition (X₀, Y₀, Z₀),
Ermitteln einer Rundlaufabweichung (Δd) aus der Differenz zwischen den aus den aktuellen Messsignalen anhand der Abstandskennlinie (8) ermittelten Ist-Abständen des Werkzeugs (3) zum Näherungssensor (4) in den mehreren unterschiedlichen Drehpositionen des Werkzeugs (3) und den gespeicherten Referenzabständen, und
Überprüfen des Werkzeugs (3) bei Überschreiten einer vorgegebenen Rundlaufabweichung.

2. Verfahren nach Anspruch 1, **dadurch gekennzeichnet, dass** die Rundlaufkontrolle an jedem eingewechselten Werkzeug (3) durchgeführt wird und der Werkzeugwechselablauf bei Überschreiten der vorgegebenen Rundlaufabweichung unterbrochen wird.

3. Verfahren nach Anspruch 1 oder 2, **dadurch gekennzeichnet, dass** die mehreren unterschiedlichen Drehpositionen des Werkzeugs (3) in äquidistanten Winkelabständen angeordnet sind.

4. Verfahren nach Anspruch 1 oder 2, **dadurch gekennzeichnet, dass** die Messsignale und die Referenzsignale oder -abstände der Rundlaufkontrolle kontinuierlich über eine 360°-Drehung des Werkzeugs (3) gemessen und miteinander verglichen werden.

5. Verfahren nach einem der vorhergehenden Ansprüche, **dadurch gekennzeichnet, dass** der Näherungssensor (4) in der Z-Achse und/oder in einer zur Werkzeugachse (Z) rechtwinkligen Richtung (Y) verfahren wird.

6. Verfahren nach einem der vorhergehenden Ansprüche, **dadurch gekennzeichnet, dass** der Näherungssensor (4) ein induktiver, kapazitiver oder optischer Näherungssensor oder ein Ultraschall-Näherungssensor ist.

7. NC-Werkzeugmaschine (1) mit einem um die Z-Achse rotierbaren Werkzeug (3) und einem Näherungssensor (4), die in einer zur Werkzeugachse (Z) rechtwinkligen Richtung (Y) relativ zueinander verfahrbar sind, und mit einer Maschinensteuerung (5), die programmiert ist, das Rundlaufüberwachungsverfahren nach einem der Ansprüche 1 bis 6 durchzuführen.

8. Werkzeugmaschine nach Anspruch 7, **dadurch gekennzeichnet, dass** der Näherungssensor (4) auf mindestens einer der NC-Achsen (X, Y, Z) der Werkzeugmaschine (1) angeordnet ist.

9. Werkzeugmaschine nach Anspruch 7 oder 8, **dadurch gekennzeichnet, dass** der Näherungssensor (3) ein induktiver, kapazitiver oder optischer Näherungssensor oder ein Ultraschall-Näherungssensor ist.

## Claims

1. Method of monitoring the concentricity of a tool (3), which can be rotated about the Z axis, of an NC machine tool (1) by means of a proximity sensor (4), wherein the tool (3) and the proximity sensor (4) can be moved relative to one another along the X, Y and Z axes,
**characterized by** the following steps:
(a) recording of a distance characteristic curve (8) of the proximity sensor (4) with respect to the tool (3) at a predetermined Z position (Z₀) of the tool (3) by relative movement of the tool (3) and the proximity sensor (4) in a direction (Y) extending at right angles to the tool axis (Z); and
either
(b1) positioning of the tool (3) with respect to the proximity sensor (4) at a predetermined measuring position (X₀, Y₀, Z₀) and storing the measuring signals of the proximity sensor (4) in a plurality of different rotary positions of the tool (3) as reference signals, and
(c1) for concentricity control of the tool (3):
renewed positioning of the tool (3) with respect to the proximity sensor (4) at the predetermined measuring position (X₀, Y₀, Z₀),
determining a difference between the current measuring signals of the proximity sensor (4) in the plurality of different rotary positions of the tool (3) and the stored reference signals,
determining a concentricity deviation (Δd) based on the distance characteristic curve (8) from the difference, and
checking the tool (3) when a predetermined concentricity deviation has been exceeded;
or
(b2) positioning of the tool (3) with respect to the proximity sensor (4) at a predetermined measuring position (X₀, Y₀, Z₀) and storing the distances of the tool (3) with respect to the proximity sensor (4), determined from these measuring signals by means of the distance characteristic curve (8), in a plurality of different rotary positions of the tool (3) as reference distances; and
(c2) for concentricity control of the tool (3):
renewed positioning of the tool (3) with respect to the proximity sensor (4) at the predetermined measuring position (X₀, Y₀, Z₀),
determining a concentricity deviation (Δd) from the difference between the actual distances of the tool (3) with respect to the proximity sensor (4) determined from the current measuring signals by means of the distance characteristic curve (8) in the plurality of different rotary positions of the tool (3), and the stored reference distances, and
checking the tool (3) when a predetermined concentricity deviation has been exceeded.

2. Method according to claim 1, **characterized in that** the concentricity control is performed on each exchanged tool (3) and the tool exchange procedure is interrupted when the predetermined concentricity deviation is exceeded.

3. Method according to claim 1 or 2, **characterized in that** the plurality of different rotary positions of the tool (3) are arranged in equidistant angular distances.

4. Method according to claim 1 or 2, **characterized in that** the measuring signals and the reference signals or reference distances of the concentricity control are measured and compared with one another continuously through a rotation of 360° of the tool (3).

5. Method according to any of the preceding claims, **characterized in that** the proximity sensor (4) is moved in the Z axis and/or in a direction (Y) extending at right angles with respect to the tool axis (Z).

6. Method according to any of the preceding claims, **characterized in that** the proximity sensor (4) is an inductive, capacitive or optical proximity sensor or an ultrasound proximity sensor.

7. NC machine tool (1) comprising a tool (3) that can be rotated about the Z axis, and a proximity sensor (4) which can be moved relative to one another in a direction (Y) extending at right angles with respect to the tool axis (Z), and comprising a machine control (5) which is programmed to perform the concentricity monitoring method according to one of the claims 1 to 6.

8. Machine tool according to claim 7, **characterized in that** the proximity sensor (4) is arranged on at least one of the NC axes (X, Y, Z) of the machine tool (1).

9. Machine tool according to claim 7 or 8, **characterized in that** the proximity sensor (3) is an inductive, capacitive or optical proximity sensor or an ultrasound proximity sensor.

## Revendications

1. Procédé de surveillance de la concentricité d'un outil (3) pouvant tourner autour de l'axe Z d'une machine-outil à commande numérique (1) au moyen d'un capteur de proximité (4), l'outil (3) et le capteur de proximité (4) étant déplaçables l'un par rapport à l'autre le long des axes X, Y et Z, **caractérisé par** les étapes suivantes consistant à
(a) enregistrer une courbe caractéristique de distance (8) du capteur de proximité (4) par rapport à l'outil (3) à une position Z prédéterminée (Z₀) de l'outil (3) par un déplacement relatif de l'outil (3) et du capteur de proximité (4) dans une direction (Y) perpendiculaire à l'axe d'outil (Z) ; et
soit
(b1) positionner l'outil (3) par rapport au capteur de proximité (4) à une position de mesure prédéterminée (X₀, Y₀, Z₀) et mémoriser les signaux de mesure du capteur de proximité (4) dans plusieurs positions de rotation différentes de l'outil (3) en tant que signaux de référence ; et
(c1) pour un contrôle de concentricité de l'outil (3) :
repositionner l'outil (3) par rapport au capteur de proximité (4) à la position de mesure prédéterminée (X₀, Y₀, Z₀),
déterminer une différence entre les signaux de mesure actuels du capteur de proximité (4) dans lesdites plusieurs positions de rotation différentes de l'outil (3) et les signaux de référence mémorisés,
déterminer un écart de concentricité (Δd) à l'aide de la courbe caractéristique de distance (8) à partir de la différence et
vérifier l'outil (3) en cas de dépassement d'un écart de concentricité prédéfini ;
soit
(b2) positionner l'outil (3) par rapport au capteur de proximité (4) à une position de mesure prédéterminée (X₀, Y₀, Z₀) et mémoriser les distances de l'outil (3) par rapport au capteur de proximité (4) déterminées à partir de ces signaux de mesure à l'aide de la courbe caractéristique de distance (8) dans plusieurs positions de rotation différentes de l'outil (3) en tant que distances de référence ; et
(c2) pour un contrôle de concentricité de l'outil (3) :
repositionner l'outil (3) par rapport au capteur de proximité (4) à la position de mesure prédéterminée (X₀, Y₀, Z₀),
déterminer un écart de concentricité (Δd) à partir de la différence entre les distances réelles de l'outil (3) par rapport au capteur de proximité (4) déterminées à partir des signaux de mesure actuels à l'aide de la courbe caractéristique de distance (8) dans lesdites plusieurs positions de rotation différentes de l'outil (3) et les distances de référence mémorisées, et
vérifier l'outil (3) en cas de dépassement d'un écart de concentricité prédéfini.

2. Procédé selon la revendication 1, **caractérisé en ce que** le contrôle de concentricité est effectué à chaque changement d'outil (3) et la procédure de changement d'outil est interrompue en cas de dépassement de l'écart de concentricité prédéfini.

3. Procédé selon la revendication 1 ou 2, **caractérisé en ce que** lesdites plusieurs positions de rotation différentes de l'outil (3) sont disposées à intervalles angulaires équidistants.

4. Procédé selon la revendication 1 ou 2, **caractérisé en ce que** les signaux de mesure et les signaux ou distances de référence du contrôle de concentricité sont mesurés en continu et comparés entre eux sur une rotation de 360° de l'outil (3).

5. Procédé selon l'une des revendications précédentes, **caractérisé en ce que** le capteur de proximité (4) est déplacé le long de l'axe Z et/ou dans une direction (Y) perpendiculaire à l'axe d'outil (Z).

6. Procédé selon l'une des revendications précédentes, **caractérisé en ce que** le capteur de proximité (4) est un capteur de proximité inductif, capacitif ou optique ou un capteur de proximité à ultrasons.

7. Machine-outil à commande numérique (1) dotée d'un outil (3) pouvant tourner autour de l'axe Z et d'un capteur de proximité (4) qui sont déplaçables l'un par rapport à l'autre dans une direction (Y) perpendiculaire à l'axe d'outil (Z), et dotée d'une commande de machine (5) qui est programmée pour mettre en œuvre le procédé de surveillance de la concentricité selon l'une des revendications 1 à 6.

8. Machine-outil selon la revendication 7, **caractérisée en ce que** le capteur de proximité (4) est disposé sur au moins l'un des axes de commande numérique (X, Y, Z) de la machine-outil (1).

9. Machine-outil selon la revendication 7 ou 8, **caractérisée en ce que** le capteur de proximité (3) est un capteur de proximité inductif, capacitif ou optique ou un capteur de proximité à ultrasons.
